# EUROPÄISCHE PATENTANMELDUNG

(11) **EP 1 154 155 A2**
(43) Veröffentlichungstag der Anmeldung: **14.11.2001**
(21) Anmeldenummer: 01109998.3
(22) Anmeldetag: 25.04.2001
(51) Int. Cl.: F03D 9/00, F03D 11/04

(54) **Windkraftanlage**

(30) Priorität: 11.05.2000 DE 20008533 U
(71) Anmelder: PMS GmbH, 44651 Herne (DE)
(72) Erfinder: Krivograd, Alfred-Anton, 44629 Herne (DE)
(74) Vertreter: Füssel, Michael, Dipl.-Ing.

(57) **Zusammenfassung**

Windkraftanlage (1) mit einem Mast (2), der untenendig starr mit einem Fundament (3) verbunden ist und mit einer obenendig am Mast (2) montierten Gondel (4) und mit an der Gondel (4) rotierend gelagerten Drehflügeln (5).

Um eine Windkraftanlage durch einfache Maßnahmen einer zusätzlichen Funktion zuzuführen, welche prinzipiell auch geeignet ist, das durch Windkraftanlagen beeinträchtigte Landschaftsbild zu verschönern, wird sie so ausgebildet, daß die von außen sichtbaren und im wesentlichen vertikalen Mastflächen (7) und/oder Gondelflächen (8) mit wetterfesten großen Bannern (20) verkleidet sind, und daß die Banner (20) mit optisch erkennbarer Werbegrafik (21) Dritter bestückt sind, wobei das Ausmaß der Banner (20) einerseits den Mast (2) bzw. die Gondel (4) deutlich verdeckt und andererseits Werbegrafik in einer Größe zuläßt, die aus der Entfernung auch noch einiger hundert Meter mit bloßem Auge lesbar ist.

## Beschreibung

Die vorliegende Erfindung betrifft eine Windkraftanlage nach Oberbegriff des Hauptanspruchs.

Derartige Windkraftanlagen sind allgemein bekannt und werden in zunehmender Weise in der Landschaft aufgestellt. Da das Windgeschwindigkeitsprofil vom Boden aus gesehen mit zunehmender Höhe ansteigt, versucht man die Gondel mit dem eingebauten Generator und die an der Gondel rotierend gelagerten Drehflügel auf einen gehörigen Abstand vom Erdboden zu bringen. Hierzu dient der Mast, an dessen oberem Ende die Gondel um eine vertikale Drehachse drehbar gelagert ist, damit sich die Drehflügel zur optimalen Energieausbeute in den Wind stellen können.

Derartige Windkraftanlagen sind bislang nur geeignet zur Erzeugung von Elektrizität durch Windenergie. Hinzu kommt, daß die zunehmende Anzahl derartiger Windkraftanlagen die Landschaft nicht unbedingt verschönert.

Es ist deshalb Aufgabe der vorliegenden Erfindung, die bekannten Windkraftanlagen durch einfache Maßnahmen einer zusätzlichen Funktion zuzuführen, welche prinzipiell auch geeignet ist, das durch Windkraftanlagen beeinträchtigte Landschaftsbild zu verschönern.

Diese Aufgabe löst die Erfindung mit den Merkmalen des Hauptanspruchs.

Wesentlich an der Erfindung ist die Anbringung von wetterfesten großen Bannern an denjenigen von außen sichtbaren Flächen der Windkraftanlage, welche im wesentlichen vertikal verlaufen. Durch diesen Grundgedanken der Erfindung erfolgt eine zumindest teilweise Verkleidung der als unschön empfundenen Konstruktionselemente derartiger Windkraftanlagen, so daß durch diese Maßnahme das optische Erscheinungsbild derartiger Windkraftanlagen in der Landschaft verbessert wird.

Dieses Banner bietet daher die Grundlage zur Anbringung von Werbegrafiken für Dritte. Es dient deshalb zusammen mit der Werbegrafik als Blickfang, um das Auge des vorbeigehenden/vorbeifahrenden Betrachters mit der gewünschten Werbeinformation zu beeinflussen.

Es ist daher wesentlich, daß die Werbegrafik selbst nicht unmittelbar auf der Windkraftanlage aufgebracht sind sondern auf einem Werbeträger, welcher durch das wetterfeste Banner entsteht.

Von daher unterscheidet sich der Kern der vorliegenden Erfindung von den an sich bekannten Werbeaufdrucken an Windkraftanlagen, welche lediglich auf den Hersteller, den Typ oder ähnliches der Windkraftanlage hinweisen und unmittelbar auf irgendwelchen Bestandteilen der Windkraftanlage selbst, also auf Mast, Gondel, Drehflügel oder ähnlichem aufgebracht sind.

Die Mastflächen bzw. Gondelflächen, und im wesentlichen nur diese, dienen daher als vermietbare Werbeflächen. Insoweit geht die Erfindung davon aus, daß diese Flächen hinreichend groß sind, um die Werbung auf dem jeweiligen Banner auch über große Entfernungen wahrnehmen zu können.

Insoweit unterscheidet sich die Erfindung von Werbeträgern, die üblicherweise unmittelbar neben Straßen bzw. Wegen angeordnet werden. Die Windkraftanlagen werden nämlich fernab vom Straßennetz bzw. von Wanderwegen etc. aufgestellt, damit die Geräusche und Schatteneffekte, welche durch die rotierenden Drehflügel hervorgerufen werden, sich nicht negativ auf vorbeipassierenden Verkehr auswirken.

Insoweit hat die Erfindung erkannt, daß die tatsächliche Größer derartiger Windkraftanlagen durchaus geeignet ist, zur Anbringung derart großen Bannern, daß die jeweilige Werbegrafik auch aus großen Entfernungen, das heißt einigen hundert Metern Abstand, mit bloßem Auge lesbar ist.

Die Windkraftanlagen der vorliegenden Erfindung erfüllen daher eine Doppelfunktion. Sie dienen einerseits als Energielieferant und andererseits als Werbemittel.

Bevorzugt soll das jeweilige Banner oberhalb der horizontalen Mitte des Mastes liegen. Diese Merkmale tragen den üblichen Abstands- und Größenverhältnissen derartiger Windkraftanlagen zu dem benachbarten Straßennetz besonders Rechnung.

Zusätzlich kann mit der obenendig am Mast sitzenden und dort drehbar gelagerten Gondel ein Seitenleitwerk verbunden sein, welches auf der von den Drehflügeln abgewandten Seite der Gondel sitzt. Dieses Seitenleitwerk weist eine zusätzliche vertikale Fläche der Windkraftanlage auf, welche im Sinne der Erfindung genutzt werden kann. Hierzu kann das Seitenleitwerk einseitig oder beidseitig mit einem entsprechenden Banner bestückt sein, um dort die gewünschte Werbegrafik aufzubringen.

Da sich die Erfindung vorwiegend auf kommerzielle Werbung für Dritte bezieht, wird zusätzlich vorgeschlagen, das jeweilige Banner über Haltevorrichtungen und zugeordnete Gegenstücke an den Mastflächen bzw. Gondelflächen anzubringen. Hierzu sind im Umfangsbereich der Mast- bzw. Gondelflächen Haltevorrichtungen vorgesehen, welche mit entsprechenden Gegenstücken am Banner korrespondieren, wobei Haltevorrichtungen und Gegenstücke wahlweise voneinander lösbar sind.

Eine zusätzliche Maßnahme, die Blickfangwirkung zu verstärken, ist die Anordnung des Banners an einem drehbaren Karussell, welches um eine vertikale, schräge oder horizontale Achse an Mast beziehungsweise Gondel sitzt.

Soweit findet eine Weiterbildung Beachtung, bei welcher ein Karussell vorgesehen ist, welches um den Mast herum rotiert. Außen am Karussell sitzt dann das Werbebanner, während der Mast das entsprechende Drehlager für das Karussell trägt.

Darüber hinaus können Antriebsschaufeln am Karussell vorgesehen sein, um dieses luftströmungsbedingt in Rotation zu versetzten.

Zweckmäßigerweise wird das Banner entweder mit einer Leuchtreklame versehen, selbstleuchtend oder reflektierend oder die Werbegrafik wird durch eine externe Lichtquelle angeleuchtet.

Im folgenden wird die Erfindung anhand von Ausführungsbeispielen näher erläutert. Es zeigen:
- Fig.1: ein erstes Ausführungsbeispiel der Erfindung in Totalansicht.
- Fig.2: ein Ausführungsbeispiel für einen Mast mit Karussell,
- Fig.3: ein Ausführungsbeispiel mit wahlweise lösbarem Banner am Mast und einem zusätzlichen Banner am Seitenleitwerk.

Sofern im folgenden nichts anderes gesagt ist, gilt die folgende Beschreibung stets für alle Figuren.

Die Figuren zeigen eine Windkraftanlage 1. Wesentlich an derartigen Windkraftanlagen ist ein Mast 2, der an seinem unteren Ende starr mit einem ortsfesten Fundament 3 verbunden ist. Am oberen Ende trägt der Mast 2 eine Gondel. Die Gondel nimmt üblicherweise einen Generator auf, dessen Generatorwelle die Gondel nach vorne überragt. Dort sind Drehflügel 5 angebracht, welche in bekannter Weise so in den Wind gestellt werden, daß der Generator 6 innerhalb der Gondel 4 durch die anströmende Luft in Drehung versetzt wird.

Wesentlich ist auch, daß bei derartigen Windkraftanlagen die Mastflächen 7 und/oder die Gondelflächen 8 mit wetterfesten großen Bannern 20 verkleidet sind und daß diese Banner 20 mit optisch erkennbarer Werbegrafik 21 versehen sind. Dabei ist das Ausmaß des jeweiligen Banners 20 mindestens so groß, daß einerseits der Mast 2 bzw. die Gondel 4 deutlich verdeckt wird und daß andererseits die Werbegrafik in einer Größe aufgebracht werden kann, die auch noch aus der Entfernung einiger hundert Meter mit bloßem Auge lesbar ist.

Hierunter ist zu verstehen, daß bei derartigen bodenständigen Bauwerken, die üblicherweise mit gehörigem Abstand von einigen hundert Metern zu vorbeiführenden Straßen und Wegen aufgesetzt werden, die Mastflächen bzw. Gondelflächen als Werbeplattform genutzt werden, die auch noch aus 100 Metern oder mehr erkennbare Werbegrafik aufweist.

Zweckmäßigerweise ist das jeweilige Banner 20 oberhalb der horizontalen Mastmitte 11 vorgesehen, um den Effekt der Lesbarkeit aus großer Entfernung zu stützen.

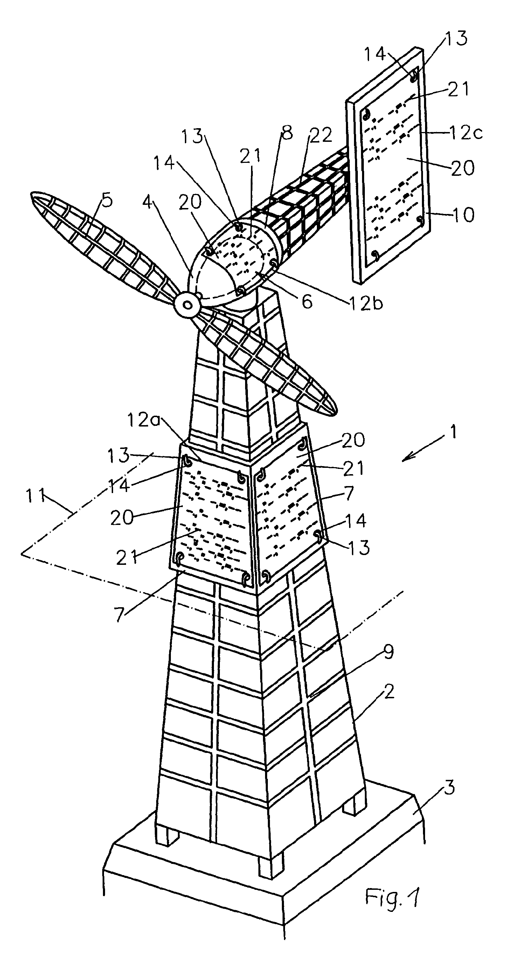

Ergänzend hierzu zeigt Fig.1 eine Windkraftanlage 1, bei welcher der Mast 2 von einem Trägerfachwerk 9 gebildet wird. Die oben befindliche Gondel 4 weist einen Schwanz 22 auf, der hier ebenfalls aus Gewichtsgründen als Fachwerkkonstruktion ausgebildet ist.

Am Ende des Schwanzes 22 ist ein Seitenleitwerk 10 angebracht, welches - zumindest optisch - der Einstellung der Gondel 4 im Sinne einer optimalen Anströmung der Drehflügel 5 durch die Luft dient.

Derartiges Seitenleitwerk 10 gilt ebenfalls der Aufnahme eines Banners 20, wobei auch hier hervorgehoben werden soll, daß die optisch erkennbare Werbegrafik 21 auch auf diesem Banner 20 Werbemaßnahmen von Dritten enthält und somit ebenfalls als eine derartige Werbeplattform dient.

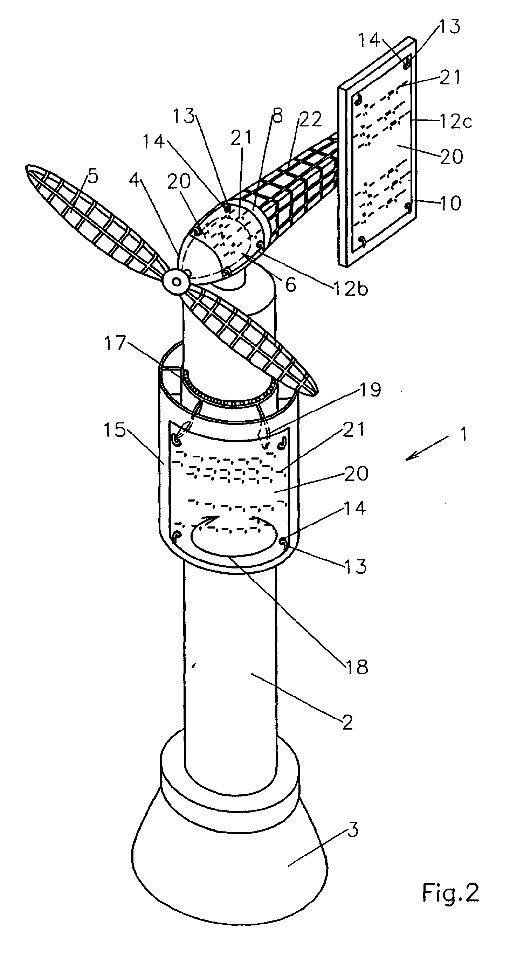

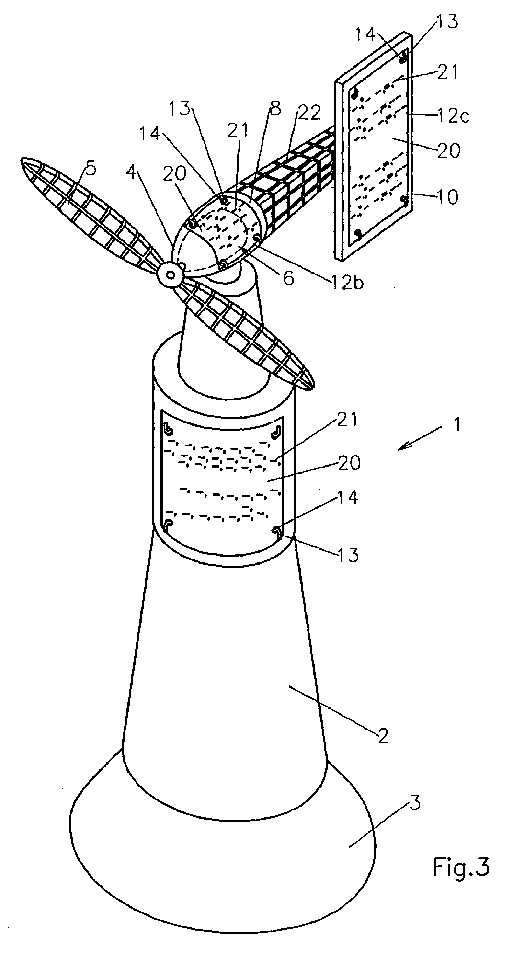

Ergänzend hierzu zeigt Fig.3 eine Weiterbildung, bei welcher im Umfangsbereich der vertikalen Mast- 12a bzw. Gondelflächen 12b,c Haltevorrichtungen 13 vorgesehen sind, und daß die Banner 20 hierzu korrespondierende Gegenstücke 14 aufweisen. Wesentlich hier ist die Tatsache, daß Haltevorrichtungen 13 und Gegenstücke 14 wahlweise voneinander lösbar sind. Ergänzend hierzu zeigt Fig.2 eine Weiterbildung, bei welcher die vertikalen Mastflächen 7 Bestandteil eines um eine vertikale Achse des Mastes 2 umlaufenden Karussells 15 sind, welches vorzugsweise oberhalb des unteren Mastdrittels an einem Drehlager 17 des Mastes 2 sitzt und um den Mast herum rotierbar ist.

In diesem Ausführungsbeispiel wird das Karussell 15 von einem Rohrabschnitt 16 gebildet, der an seiner oberen umlaufenden Kante in dem Drehlager 17 sitzt und an seinem Außenumfang zur Aufnahme des Banners im Sinne dieser Erfindung ausgelegt ist.

Damit das Karussell 15 in die entsprechende Drehrichtung versetzt werden kann, sind zusätzliche Antriebsschaufeln 19 vorgesehen, die das Karussell durch die Krafteinwirkung der an- bzw. vorbeiströmenden Luft in. die Rotationsrichtung 18 in Bewegung setzen.

Zu diesem Zweck empfiehlt es sich, das Karussell 15 zumindest oberhalb des unteren Mastdrittels vorzusehen. Hierdurch wird zusätzlich die Erkennbarkeit aus größeren Entfernungen unterstützt.

In jedem Falle liegt auch bei diesem Ausführungsbeispiel, genauso wie im Ausführungsbeispiel gemäß Fig.3 am Karussell 15 ein Umfangsbereich 12 vor, der in etwa der Außenkontur des Banners 20 entspricht, und an welchem entsprechende Haltevorrichtungen 13 vorgesehen sind, um das Banner 20 dort wahlweise lösbar zu befestigen.

Zusätzlich kann vorgesehen sein, das Banner 20 mit einer Leuchtreklame auszustatten, die entweder selbstleuchtend oder reflektierend oder durch externe Lichtquellen angeleuchtet werden kann.

### Bezugszeichenliste:

- 1: Windkraftanlage
- 2: Mast
- 3: Fundament
- 4: Gondel
- 5: Drehflügel
- 6: Generator
- 7: Mastfläche
- 8: Gondelfläche
- 9: Trägerfachwerk
- 10: Seitenleitwerk
- 11: horizontale Mastmitte
- 12a: Umfangsbereich der Mastfläche
- 12b,c: Umfangsbereich der Gondel
- 13: Haltevorrichtung
- 14: Gegenstück
- 15: Karussell
- 16: Rohrabschnitt
- 17: Drehlager
- 18: Rotationsrichtung
- 19: Antriebsschaufel
- 20: Banner
- 21: Werbegrafik
- 22: Schwanz

## Patentansprüche

1. Windkraftanlage (1) mit einem Mast (2), der untenendig starr mit einem Fundament (3) verbunden ist und mit einer obenendig am Mast (2) montierten Gondel (4) und mit an der Gondel (4) rotierend gelagerten Drehflügeln (5), **dadurch gekennzeichnet, daß** die von außen sichtbaren und im wesentlichen vertikalen Mastflächen (7) und/oder Gondelflächen (8) mit wetterfesten großen Bannern (20) verkleidet sind,
daß die Banner (20) mit optisch erkennbarer Werbegrafik (21) Dritter bestückt sind,
und daß das Ausmaß der Banner (20) einerseits den Mast (2) bzw. die Gondel (4) deutlich verdeckt und andererseits Werbegrafik in einer Größe zuläßt, die aus der Entfernung auch noch einiger hundert Meter mit bloßem Auge lesbar ist.

2. Windkraftanlage nach Anspruch 1, **dadurch gekennzeichnet, daß** die Banner (20) oberhalb der horizontalen Mastmitte (11) sitzen.

3. Windkraftanlage nach Anspruch 2, **dadurch gekennzeichnet, daß** die Banner (20) mit ihren Unterkanten oberhalb der horizontalen Mastmitte (11) angeordnet sind.

4. Windkraftanlage nach einem der Ansprüche 1 bis 3, **dadurch gekennzeichnet, daß** auf der von den Drehflügeln (5) abgewandten Seite der Gondel (4) ein Seitenleitwerk (10) angebracht ist, welches mit Bannern (20) bestückt ist.

5. Windkraftanlage nach einem der Ansprüche 1 bis 4, **dadurch gekennzeichnet, daß** im Umfangsbereich (12a,b,c) der Mast- bzw. Gondelflächen Haltevorrichtungen (13) vorgesehen sind und daß die Banner (20) Gegenstücke (14) aufweisen, wobei Haltevorrichtungen (13) und Gegenstücke (14) wahlweise voneinander lösbar sind.

6. Windkraftanlage nach einem der Ansprüche 1 bis 5, **dadurch gekennzeichnet, daß** die Banner (20) um eine vertikale Achse drehbar am Mast (2) beziehungsweise Gondel (4) sitzen.

7. Windkraftanlage nach Anspruch 6, **dadurch gekennzeichnet, daß** die vertikalen Mastflächen (7) Bestandteil eines um eine vertikalen Achse umlaufenden Karussells (15) oder dergleichen sind, welches oberhalb des unteren Mastdrittels an einem Drehlager (17) des Mastes sitzt und um den Mast herum rotierbar ist.

8. Windkraftanlage nach Anspruch 7, **dadurch gekennzeichnet, daß** am Karussell (15) Antriebsschaufeln (19) vorgesehen sind, über welche das Karussell (15) in Rotation durch Luftbewegung versetzt wird.

9. Windkraftanlage nach einem der Ansprüche 1 bis 8, **dadurch gekennzeichnet, daß** die Banner (20) mit einer Leuchtreklame versehen sind.

10. Windkraftanlage nach einem der Ansprüche 1 bis 8, **dadurch gekennzeichnet, daß** die Banner (20) mit einer durch externe Lichtquellen angeleuchteten Reklame ausgestattet sind.
